# EUROPEAN PATENT APPLICATION

(11) **EP 1 592 204 A1**
(43) Date of publication of application: **02.11.2005**
(21) Application number: 05290336.6
(22) Date of filing: 15.02.2005
(51) Int. Cl.: H04L 29/06

(54) **Engine-mounted microserver**

(30) Priority: 27.04.2004 US 832727
(71) Applicant: UNITED TECHNOLOGIES CORPORATION, Hartford, Connecticut 06103 (US)
(72) Inventor: Loda, David C., Bolton, Connecticut 06043 (US); Stickling, Bjorn, Mississauga, Ontario L5N 7NS (CA); Macchia, Enzo, Kleinburg, Ontario LOJ 1CO (CA); Qadri, Samad, Brossard, Ontario J4Y 2L2 (CA)
(74) Representative: Burbaud, Eric

(57) **Abstract**

An integrated system for monitoring a deployed product on a movable platform, gathering data about the deployed product, and disseminating the data about the deployed product is disclosed. The system includes a server located on the movable platform capable of communication with the server from a remote location. The server communicates with a source of data about the deployed communicates with a source of data about the deployed product. The system further includes a portal onto which data gathered by the server may be downloaded and with which one can upload information to the server. The server may be mounted onto a housing of the deployed product and be electronically connected to a controller for the deployed product.

## Description

### Cross-Reference to Related Application

This is a continuation-in-part of U.S. patent application serial no. 10/155,593, filed on May 22, 2002, which claims priority to U.S. provisional patent application serial no. 60/337,926, filed on December 3, 2001; both of which are herein incorporated by reference.

### Field of the Disclosure

The present disclosure generally relates to integrated Internet systems and, more particularly, relates to the provision of an Internet portal on board a deployed product.

### Background of the Disclosure

There are three general types of maintenance for products. They are on-demand maintenance (usually when a product breaks), scheduled maintenance (based upon the best estimate of a manufacturer as to when something will wear out with normal usage), and condition based maintenance (maintenance that occurs when maximum usage is obtained from a part but just prior to part failure). On demand maintenance is self-explanatory. It is when a component fails and has to be repaired or replaced. This normally occurs as an end result of its operators not understanding its component life or the conditions of its use, and the highest costs, both physical and lost time, are associated with it. Unfortunately, it is also one of the most common types of maintenance. Scheduled maintenance is less costly but can be very wasteful. Depending upon the usage of a product, one may be replacing parts that still have a significantly useful life. This is also where corners tend to be cut by the customer when budgets become tight, and often leads back to the first type of maintenance described above. The third form of maintenance is condition-based maintenance and is the holy grail of maintenance in many industries. If a manufacturer or service organization can accurately ascertain the maximum life of a component based upon actual wear, tear, and usage, it could then allow for the optimized, just-in-time servicing and replacement of that component, thereby allowing for the user to gain maximum product life and to schedule the replacement at a non-critical time. As a result, a manufacturer utilizing condition based maintenance could better plan its spares production and save millions of dollars in unnecessary production, warehousing and inventory taxes.

There is however a catch to condition-based maintenance. A closed feedback loop system of information related to the use of each product must be provided. Without first-hand knowledge of how a product is being used after it is sold and deployed to the field, a manufacturer or service provider has no real way of knowing when components will wear out based on usage, and must therefore default back to using one or both of the first two types of maintenance described above. Operators are in the best position to gather this first hand knowledge, but most are too busy operating and making money with the product and have little time, money and/or inclination to attempt to capture this information to provide feedback to the manufacturer or service provider even though it is in their own best interest to do so.

In an attempt to gather useful information from the field, a variety of methods have been used to try and solve the collection of product usage data. On the low end, customer surveys, feedback forms, and interaction with field support personnel have been the primary means of obtaining a rudimentary form of feedback. For complex and expensive products, such as aircraft engines, the most common form is that of paper-based operational logs. This is a highly manual and painful method of collecting operational information. Over the years, computer collection systems have tried to make this process easier, but they still require a great deal of manual intervention.

More recent advances have involved the incorporation of automated data recording devices onto products, such as engine data units (or EDUs), which are used on turbine engines, and which communicate with electronic engine control (EEC) systems and record operational data using a variety of sensors. However, it is still extremely difficult and costly to gather information from these data collection devices, as it must be done manually by mechanics in the field using specialized equipment or laptop computers temporarily cabled to the EDU or EEC, and with which they usually have little familiarity or interest. The only other option is to wait until the product is returned to a shop environment for a major overhaul and repair, at which point the data from a preventative maintenance perspective is moot, and useful only from a post analysis or fleet average perspective.

A number of industries normally attempt to gather product usage intelligence through manual inspections and, more recently, laptop computer downloads performed concurrently with scheduled or on-demand maintenance service calls. This is normally accomplished by one of two methods: sending the service person to the product, bringing the product to a service center, or both. Examples of the former include products with fixed installations, such as elevators, HVAC systems, nuclear power plants, and large home appliances. Examples of the latter include automobiles, small home appliances, home electronics equipment, lawn-mowers, or anything small enough to be easily carried or shipped. Both methods are inefficient and result in significant down time.

With advances in low cost computing and the advent of wireless technologies and the Internet, companies are now looking at how they can collect product usage intelligence in an automated and remote fashion. Many of the systems which have evolved such as VHF frequency, cell phone, or wireless land-based data download methods, tend to be very expensive as have attempts at using emerging technologies to accomplish essentially the same thing i.e., remote data file compression and download to a central location using a public or private network/Internet where the information can then be manually uncompressed and analyzed. As a result, the high cost associated with such methods restricts the application of wireless remote monitoring to high value products, such as jet aircraft and helicopters. Thus, there remains a need for a low cost, wireless system which accurately ascertains the condition of a deployed product based upon actual wear, tear, and usage and presents information about that condition to a user, a manufacturer, an operator, or any other interested party, that is deployable with the product and that provides greater flexibility and interaction than simple data downloading.

In addition to the above, it would be advantageous if a system were to be provided which would allow for existing deployed products, such as aircraft, to be retrofitted to have onboard Internet capabilities. Such a system would enable ground personnel at distant locales to access a website containing information related to a given aircraft, as well as enable two-way communication between the aircraft and the remote locations by way of the Internet. It would also be advantageous if such a retrofit option were to be provided at a minimum of cost, preferably, taking advantage of existing resources already onboard the aircraft.

### Summary of the Disclosure

In accordance with one aspect of the disclosure, a system for communicating with a deployed product is disclosed which comprises a deployed product, an electronic control box mounted to the deployed product, a microserver mounted to the deployed product and communicably coupled to the electronic control box, and a computing device remote from the deployed product. The microserver receives data about the deployed product and hosts a web page through which the received data is accessible while the computing device is adapted to wirelessly access the microserver web page.

In accordance with another aspect of the disclosure, a deployed product is disclosed which comprises a housing, an electronic control box mounted to the housing, and a microserver mounted to the housing and communicably coupled to the electronic control box. The microserver hosts a web page and generates a wireless system around the deployed product.

In accordance with another aspect of the disclosure, a gas turbine engine is disclosed which comprises a compressor section, a combustion section downstream of the compressor section, a turbine section downstream of the combustion section, a casing surrounding the compressor section, combustion section, and turbine section, an engine control box mounted to the engine casing, and a microserver mounted to the engine casing and communicably coupled to the engine control box. The engine control box controls and monitors operation of the engine.

In accordance with a still further aspect of the disclosure, a method of communicating with a deployed product is disclosed which comprises the steps of installing a microserver onto a housing of the deployed product, connecting the microserver to an electronic control box also mounted onto the housing, hosting a web page on the microserver, and accessing the web page wirelessly over the Internet.

In accordance with a still further aspect of the disclosure, a retrofit kit for a deployed product is disclosed, which comprises a microserver directly connected to the electronic controller and wherein the microserver hosts a wep page and generates a wireless system around the deployed product.

These and other aspects and features of the disclosure will become more readily apparent upon reading the following detailed description when taken in conjunction with the accompanying drawings.

### Brief Description of the Drawings

FIG. 1 is a schematic representation of an integrated system for monitoring, gathering data about, and disseminating data about a deployed product in accordance with one embodiment of the present disclosure;

Fig. 2 is a schematic representation of a gas turbine engine retrofitted with one embodiment of an engine mounted microserver of the present invention; and

FIG. 3 is a block diagram illustrating one embodiment of an engine mounted microserver system constructed in accordance with the teachings of the disclosure.

While the following disclosure is susceptible to various modifications and alternative constructions, certain illustrative embodiments thereof have been shown in the drawings and will be described below in detail. It should be understood, however, that there is no intention to limit the disclosure to the specific forms disclosed, but on the contrary, the intention is to cover all modifications, alternative constructions, and equivalents falling within the spirit and scope of the disclosure as defined by the appended claims.

### Detailed Description of the Disclosure

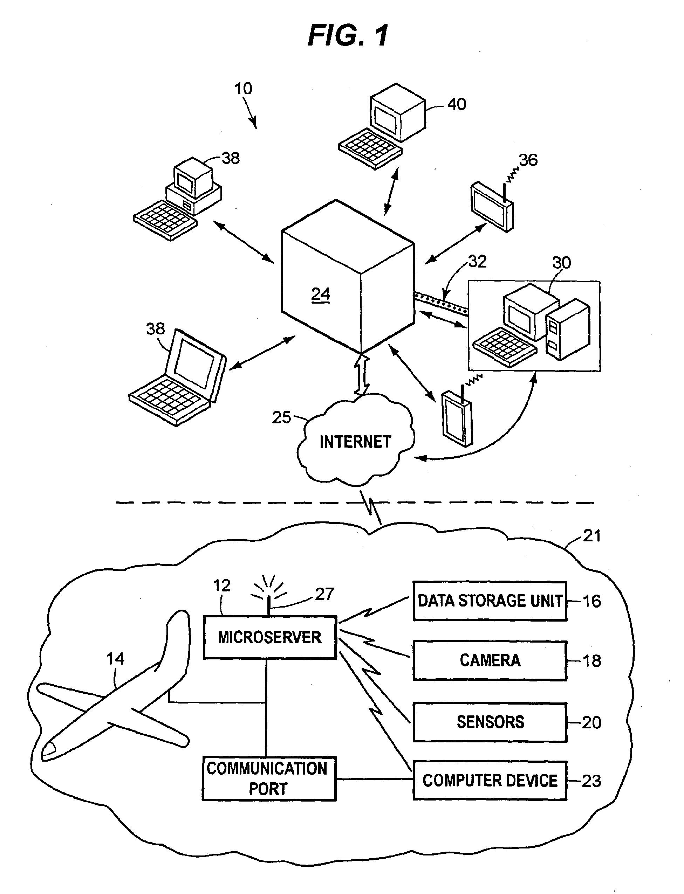

Referring now to FIG. 1, a system 10 is presented which is capable of monitoring a deployed product, gathering data about the deployed product, and disseminating the data to interested parties. It is also capable of monitoring and restricting access to its data, and can accept data for storage or integration within the product itself, such as firmware revision updates. As used herein, the term "deployed product" has broad applicability and refers to any product, component, or system on a variety of machines including but not limited to a vehicle, a HVAC system, or an elevator/escalator system such as a propulsion system on a vehicle, a compartment of a vehicle, or a braking system for a vehicle, wherein the vehicle is any one of a number of movable devices including aircraft and elevator cars.

The system 10 includes a server 12 located on the deployed product or movable platform 14. The movable platform 14 may be a boat, an airplane, a spacecraft, an automobile, a truck, or any other entity that is movable with an airplane being depicted for ease of understanding. The server 12 may monitor the condition of and/or gather data about the deployed product in a number of ways. For example, the server 12 may be connected to or integrated with a vehicle data storage unit 16 which contains data about the deployed product. The server 12 may also be connected to a video camera 18, such as video web camera, to provide pictures, in real-time or on a delayed basis, of the deployed product. Still further, the server 12 may be connected to a number of sensors 20, such as a vibration sensor or a temperature sensor, which provide additional or environmental information about the condition of the deployed product.

The server 12 may be programmed in any suitable language known in the art to gather the data about the deployed product and present the data to interested parties in a desired format. For example, the server 12 may be used to host a web page which provides information about one or more deployed products on the movable platform. The web page may have a menu which allows an interested party to gain access to gathered data about a particular deployed product. The data about the deployed product(s) may be organized on the server 12 and presented in any desirable format or manner. The server 12 may also be programmed to allow an interested party to carry out diagnostic operations on the deployed product(s) and/or to upgrade software associated with the deployed product(s). By providing the server 12 on the deployed product 14, a wireless system or internet 21 is provided around the entire deployed product 14 enabling wireless communication to any electronic device thereon as will be described in further detail herein.

While it is contemplated that the system 10 of the present disclosure would primarily be used to allow interested parties in remote locations to obtain information about a deployed product, there will be times when a mechanic or an engineer may want to interact with the server 12 while he or she is onboard the movable platform 14. To this end, the server 12 may be provided with a local USB or other communications port 22 for direct hook-up. A mechanic or engineer could then gain access to the server 12 by hooking up a promtop, laptop computer or another device 23 such as a video borescope or a bar code reader to the communications port 22. Other examples of communication ports through which access may be gained to server 12 include wireless peer-to-peer communication links. The mechanic or engineer could then conduct a desired diagnostic operation or even fix a problem with the deployed product. Similarly, any passenger on board the deployed product 14 could use his or her own computer device to access the server 12 and thus the Internet 25, again as will be described in further detail herein.

The server 12 may comprise any suitable computer or processing unit known in the art. The server 12 may be a hand-held sized microserver using a Linux-based operating system or as will be described in further detail herein may be a self enclosed box adapted to be connected to a larger computing device. Further, the server 12 may be provided with its own web address, a firewall, and security protocols known only to selected individuals, such as the manufacturer of the deployed product.

In accordance with the present disclosure, the server 12 is capable of being accessed by interested parties via a portal 24 and the Internet or world wide web 25. To this end, the server 12 may have a communications device, such as a modem built within it to allow communication between the server 12 and the portal 24. The communication device may allow for radio frequency communications such as cellular communication, satellite communication, an/or wireless communication between the server 12 and the portal 24. In addition, communications between the server 12 and the portal 24 may be achieved by optical means such as an infrared link.

The portal 24 is hosted by an external server which may be any suitable server known in the art. The server hosting the portal 24 also has appropriate communication means associated it to allow it to gain access to and be accessed by the server 12.

Data gathered by and stored on the server 12 may be downloaded to the portal 24 as desired. For example, the server 12 may be programmed to periodically download data to the server hosting the portal 24 or to download data on specific events such as when an aircraft lands or when a truck or automobile reaches a particular destination. The server 12 may also download data to the portal 24 upon the activation of a switch by an operator onboard the moving platform. Alternatively, the portal server may upload data to the microserver, such as product firmware revisions or technical manuals for access by interested parties. The server 12 may include an antenna 27 or the like to facilitate such wireless communication.

The portal 24 may be provided with a number of software tools called gadgets to automatically analyze, organize, and sort the data which has been received from the server 12. The data is preferably sorted so that different communities gain access to different portions of the data. For example, actual and potential customers of a vendor of a deployed product may form one community and have access to certain data, while support engineers and product designers may form a second community and have access to another form of the data. As can be seen from the foregoing discussion, the portal 24 offers great flexibility as to how and to whom the data is disseminated. Still further, the portal 24 provides virtual shared spaces which allow for the common space posting and access of information about a deployed product in a shared awareness between customers, support engineers, field operatives, and even product designers. The portal 24 may also be designed to provide chat rooms, bulletin boards, and on-line meeting capabilities where interested parties can communicate with each other.

One of the advantages to using the portal 24 is that its functionality can be carried out in a secure, user friendly, web-based environment. Members of a particular community can log in by presenting an identification and/or a password and gain access to current information about a deployed product. Another advantage to using the portal 24 is that it can be used to upload data, information, instructions, software, technical publications, diagnostic programs, etc. to the server 12. Thus, an engineer can perform diagnostic tests on a deployed product from a remote location using the Internet. Similarly, a service engineer working in the aircraft can gain access to a technical publication outlining how to repair a certain situation, for example, through the server 12. As the communication is two way, access, upload, download, and execution of all such information and data can be performed at the deployed product or remote locations. Moreover, the technician can be temporarily connected to the microserver to perform the repair, diagnostics, etc., and thereafter disconnect from the system.

Access to the portal 24 may be gained in a number of different ways by a variety of devices as described below. For example, an interested party can communicate with the portal 24 through his/her personal computer 38 and the web browser on the computer 38. The computer 38 may be a PC workstation at an office of a user or a laptop or PC at a home of a user. Even a computer 40 in an Internet café may be used to gain access to the portal 24. A wireless PC tablet 36 on the shop floor of a manufacturer of the deployed product may also be used to communicate with the portal 24. The portal 24 may also be in communication with the internal network 30 of the manufacturer of or a vendor of the deployed product. When the portal 24 is to be in communication with the network 30, a secure data pipe 32 may be used for crawlers for automated data exchange. If desired, the portal 24 may communicate with the internal network 30 via a wireless PDA.

The system 10 may also be configured to allow the internal network 30 to communicate directly with the server 12 via the Internet by dialing up the web address for the server 12. When in such a configuration, a firewall may be provided between the internal network 30 and the server 12.

As can be seen from the foregoing discussion, the system 10 of the present disclosure has broad applicability and can be used for a wide variety of purposes. For example, as previously mentioned, the system 10 can be used by an engineer working for a manufacturer of the deployed product to gain access to the server 12 and to then carry out a diagnostic operation or a fix on a particular deployed product. All of this can be carried out while the movable platform 14 is in motion and in a location remote from the engineer, thus avoiding having to return a deployed product to a manufacturer for diagnosis and repair.

The system 10 may also be used to check the status of a deployed product. For example, an operator of a fleet of airplanes having a network 30 may contact the server 12 on a particular airplane, either directly or through the portal 24, and learn the location of and the status of that airplane. Alternatively, a manufacturer of a jet engine may access the server 12 through its network, again either directly or through the portal 24, to ascertain the condition of a particular jet engine or a particular component on the jet engine to determine when that engine or component may require servicing, and to collect data in determining product and fleet averages for improved product design and support. This can save the manufacturer unnecessary warranty, maintenance wear, and spare parts production costs.

One advantage to the system of the present disclosure is that it may be easily and cheaply installed into a vehicle. For example, the server 12 may be installed in the cabin of an aircraft, by using existing test ports already wired into the engine/airframe.

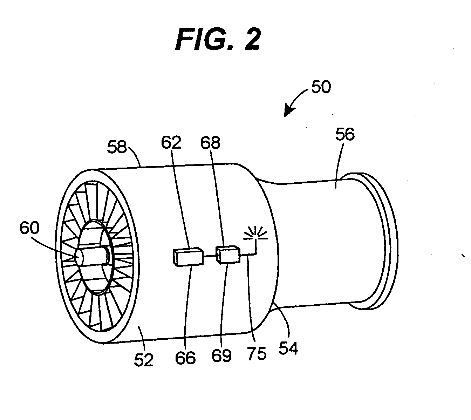

Referring now to FIG. 2, a gas turbine engine retrofitted or constructed in accordance with the teachings of the present disclosure is generally referred to by reference numeral 50. While the following description will be given with respect to the engine 50, it is to be understood that the teachings of the disclosure can be used in conjunction with any other deployed product to generate a wireless system around the deployed product and thus make two-way wireless communication between the deployed product and a remote computing device possible.

As is conventional, the gas turbine engine generally includes a compressor section 52, a combustion section 54, and a turbine section 56 surrounded by an fan case 58. Rotation of the compressor section 52 causes ambient air to be ingested and compressed before being communicated to though a diffuser and into the combustion section 54. In the combustion section 54, the compressed air is combined with fuel and ignited, thereby generating hot, rapidly expanding combustion gases which get communicated to the turbine section 56. The blades of the turbine section rotate as a result, and as they are mounted to the same shaft assembly 60 as the compressor section 52, the engine cycle is perpetuated.

As also shown in FIG. 2, an electronic controller or control box 62 is connected to the engine 50, and can be mounted to the fan case 58. The controller 62 is wired to various components and sensors in the engine 50 for operation, modification and recordation of engine operation. The controller 62 can be provided in many forms including, but not limited to, a FADEC (Full Authority Digital Electronic Control) or EEC (Electronic Engine Control), and may include a number of circuitry boards or cards mounted within a housing 66. The controller 62 may work in conjunction with an EDU (Electronic Data Unit) or Data Management Unit (DMU) for storage of data related to engine operation. The means for controlling the engine may employ any known technology but generally performs as an electric fuel control or injector taking power and throttle commands/signals from the cockpit and adjusting engine control to provide the desired power. The EEC or other electronic control may include a plurality of cards or boards, including a motherboard, slidably mounted in a rack of the EEC. The cards/boards receive inputs from the cockpit and various engine sensors, and outputs signals to valves and controls on the engine to effectuate its operation.

However, departing from prior art engine control, the engine 50 further includes a microserver 68 connected to the engine controller 62. The microserver 68 can be so connected by any pre-existing communication port on the controller 62, by hard-wiring the two together or the like. As seen in Figure 2, the microserver 68 could directly connect to the engine controller 62. The microserver 68 can be provided within a self-contained enclosure 69 and be mounted to the engine casing 58 in a manner similar to the engine controller 62. In so doing, a relatively inexpensive apparatus and method by which the existing engine controller 62 can generate a wireless system enabling two-way wireless communication through the Internet is provided. The microserver generates a local wireless intranet in and around the deployed product capable of operating in conjunction with, or independent from, the Internet.

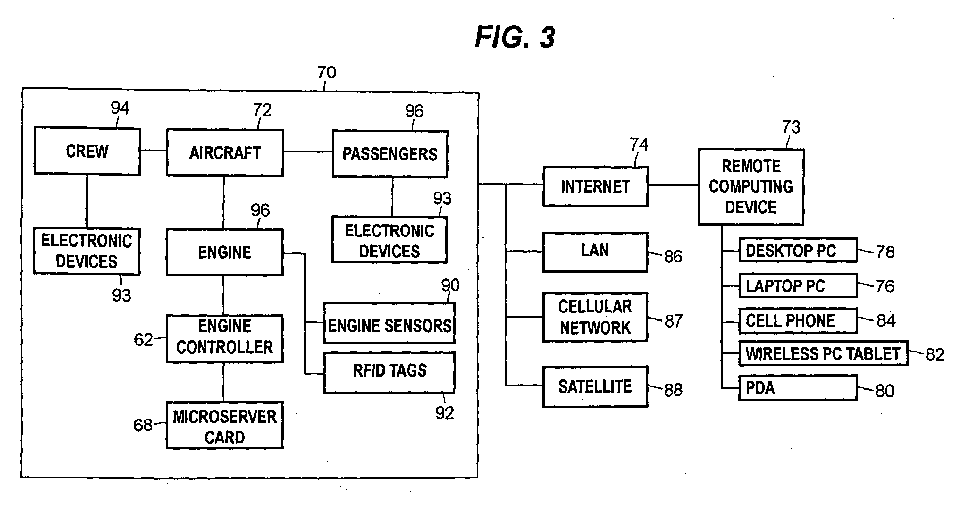

More specifically, as indicated in FIG. 3, once the microserver 68 is installed, a wireless system or intranet 70 is generated around the entire deployed product, in this case including the engine 50 and the entire aircraft 72 to which the engine 50 is attached. This wireless system 70 enables significant communication on many levels as will described in detail below. First, the wireless system 70 enables communication with remote locations such as remote computing devices 73. To facilitate this communicate, as indicated above, the microserver 68 may serve as a host for a web page accessible through the Internet 74. Accordingly, individuals wishing to gain information as to the operating data generated by the engines 50, for example, can simply log into the given website for that engine by way of the Internet 74 and the remote computing device 73 and be immediately connected to the microserver 68, and in turn be made privy to the data associated with the engine 50. The microserver 68 may include an antenna 75 to facilitate communication.

As indicated above, the remote computing device 73 can be provided in the form of any currently known or understood computing device including, but not limited to, laptop computers 76, desktop computers 78, personal digital assistants 80, wireless PC tablets 82, and cellular phones 84. The wireless system 70 may connect to the Internet 74 by any number of mechanisms including a local area network (LAN) 86, a cellular network 87, and a satellite 88.

In addition to enabling wireless communication with remote computing devices 72, the microserver 68 further enables wireless communication with various sensors, such as engine sensors 90, and RF (radio frequency) identification tags 92 of components, such as components within the engine 50. In so doing, not only can the microserver 68 gain access to engine control data through the other cards and electronics of the engine controller 62, but the microserver 68 can also receive data directly from the sensors 90 and tags 92 in a wireless fashion. As a result, the remote computing device 73 can also receive data directly from the sensors 90 and tags 92 in a wireless fashion as well. It can therefore be seen that the microserver card 68 can act as a coordinating server in communication with other computing devices, servers, and systems on board the deployed product.

It is also important to understand that once the microserver 68 is electrically coupled to the engine controller 62, the microserver 68 immediately serves as both a client and a server. More specifically, by hosting a webpage, the microserver 68 is a client to the internet and every remote computing device 73. As every engine 50 on the aircraft could include its own microserver and webpage, a remote user could log into the website for a particular engine 50 and immediately gain access to the operating data of the engine in a real-time capacity. Predictive maintenance is therefore enhanced. The web page may have an IP address available for various Internet protocols including, but not limited to, HTTP, FTP, SMTP, UDP, ECHO, SSH, TELNET, NAMESERVER, BOOT PS, BOOT PC, TFTP, KERBEROS, POP3, NNTP, IMAP, SNMP, BGP, IMAP3, LDAP, and HTTPS.

The microserver 68 could be a server to every computing device 93 on, or part of, the aircraft 72. This includes not only the engine controller 62, but controllers for other components of the aircraft (*e.g.* auxiliary power units), along with every computing device 93 of the crew 94 and passengers 96. For example, one of the passengers 96 may wish to log into the Internet 74 to gain access to email, among other things. The passenger 96 can access the Internet 74 to do so by using his or her PDA 93 or the like and taking advantage of the wireless system/intranet 70, or hot spot, generated by the microserver 68. In so doing, it can be seen that the microserver 68 provides a portal to the Internet 74 in its server capacity.

In operation, it can therefore be seen that the microserver taught by the pending disclosure enables existing deployed products to be easily retrofitted to be Internet accessible. The microserver can be connected to an existing electronic controller to generate a wireless system surrounding the deployed product and thus enabling two-way communication with the deployed product by way of the Internet.

## Claims

1. A system for communicating with a deployed product, comprising:
an electronic controller capable of communication with the deployed product;
a microserver communicably coupled to the electronic control box, the microserver receiving data about the deployed product from the electronic controller and hosting a web page through which the received data is accessible, the web page having an IP address available for a plurality of Internet protocols; and
a computing device remote from the deployed product, the computing device adapted to wirelessly access the microserver web page.

2. The system of claim 1, wherein the deployed product is an aircraft engine.

3. The system of claim 1, wherein the microserver is communicably coupled to sensors installed on the deployed product.

4. The system of claim 3, wherein the microserver wirelessly communicates with the sensors.

5. The system of claim 1, wherein the computing device accesses the microserver web page by way of a local area network.

6. The system of claim 1, wherein the computing device accesses the microserver web page by way of a cellular network.

7. The system of claim 1, wherein the computing device accesses the microserver web page by way of satellite.

8. The system of claim 1, wherein the computing device is selected from the group of computing devices consisting of desktop computers, personal digital assistants, cellular phones, laptop computers, and wireless PC tablets.

9. The system of claim 1, wherein the deployed product is an aircraft.

10. The system of claim 9, wherein the microserver is a server for all computing devices on board the aircraft and a client to the Internet.

11. The system of claim 1, wherein the microserver performs as a client to the Internet.

12. The system of claim 1, wherein the microserver performs as a server to the computing device remote from the deployed product.

13. The system of claim 1, wherein the microserver generates a local wireless intranet in and around the deployed product, the local wireless intranet adapted to operate in conjunction with the Internet, the local wireless intranet also being adapted to operate independently of the Internet.

14. The system of claim 1, wherein the microserver is a coordinating server in communication with other computing devices, servers, and systems onboard the deployed product.

15. The system of claim 1, wherein the microserver hosts software tools for data analysis.

16. The system of claim 15, wherein the software tools for data analysis are accessible from the computing device remote from the deployed product.

17. The system of claim 1, wherein the microserver hosts technical publications about the deployed product.

18. The system of claim 17, wherein the technical publications about the deployed product are accessible from the computing device remove from the deployed product.

19. The system of claim 1, wherein the microserver may be temporarily coupled to the electronic controller to enable the electronic controller to enable maintenance personnel to temporarily access the electronic controller.

20. A communications system for a deployed product, comprising:
an electronic controller box for communicating with the deployed product, and
a microserver communicably coupled to the electronic controller, the microserver hosting a web page and generating a wireless system around the deployed product, the web page having an IP address available for a plurality of Internet protocols.

21. The communications system as recited in claim 20, further comprising a housing.

22. The deployed product of claim 20, wherein the housing is an aircraft engine and the electronic controller is an engine controller.

23. The deployed product of claim 20, further including a plurality of sensors operatively associated with the deployed product, the microserver receiving signals from the sensors.

24. The deployed product of claim 23, wherein the microserver receives the signals wirelessly from the sensors.

25. A gas turbine engine, comprising:
a compressor section;
a combustion section downstream of the compressor section;
a turbine section downstream of the combustion section;
a casing surrounding at least one of the compressor section, combustion section and turbine section;
an electronic controller mounted to the engine casing, the electronic control box controlling and monitoring operation of the engine; and
a microserver mounted to the engine casing and communicably coupled to the electronic control box.

26. The gas turbine engine of claim 25, wherein the microserver hosts a web page, the web page having an IP address available for a plurality of Internet protocols.

27. The gas turbine engine of claim 25, wherein the microserver generates a wireless system surrounding the engine and adapted to connect to the Internet.

28. The gas turbine engine of claim 25, wherein the microserver is communicably coupled to sensors installed on the engine.

29. The gas turbine engine of claim 28, wherein the microserver is hard-wired to the sensors.

30. The gas turbine engine of claim 28, wherein the microserver communicates with the sensors wirelessly.

31. The gas turbine engine of claim 30, wherein the microserver communicates by way of radio frequency identification tags.

32. The gas turbine engine of claim 25, wherein the microserver connects to the Internet by way of a local area network.

33. The gas turbine engine of claim 25, wherein the microserver connects to the Internet by way of a cellular network.

34. The gas turbine engine of claim 25, wherein the microserver connects to the Internet by way of satellite.

35. A method of communicating with a deployed product, comprising:
installing a microserver on the deployed product;
connecting the microserver to an electronic controller also mounted on the deployed product;
hosting a web page on the microserver, the web page having an IP address available for a plurality of Internet protocols; and
accessing the web page wirelessly over the Internet.

36. The method of claim 35, wherein the microserver and electronic control box are mounted on a housing as an aircraft engine.

37. The method of claim 35, wherein the deployed product is an aircraft.

38. The method of claim 37, wherein the web page serves as a portal through which passengers on board the aircraft can access the Internet and computing devices remote from the aircraft can communicate with the aircraft.

39. The method of claim 35, wherein the web page is accessed using a computing device selected from the group of computing devices consisting of desktop computers, personal digital assistants, cellular phones, laptop computers, and wireless PC tablets.

40. The method of claim 35, wherein the web page is accessed over a local area network.

41. The method of claim 35, wherein the web page is accessed over a cellular network.

42. The method of claim 35, wherein the web page is accessed by way of satellite.

43. The method of claim 35, further including computing signals from sensors installed on the deployed product to the microserver.

44. The method of claim 43, wherein the signals are communicated wirelessly.

45. A retrofit kit for a deployed product having an electronic controller comprising a microserver directly connected to the electronic controller, wherein the microserver hosts a web page and generates a wireless system around the deployed product, the web page having an IP address available for a plurality of Internet protocols.

46. The retrofit kit as recited in claim 45, wherein the microserver is connected to the electronic controller using a communications port of the electronic controller.
